Europäisches Patentamt

(19) European Patent Office

Office européen des brevets

(11) Numéro de publication : **0 013 197 B1**

(12) **FASCICULE DE BREVET EUROPÉEN**

(45) Date de publication du fascicule du brevet :
28.12.83

(21) Numéro de dépôt : **79400884.7**

(22) Date de dépôt : **19.11.79**

(51) Int. Cl.³ : **B 29 F 1/12, A 43 B 7/32**

(54) Procédé pour la fabrication d'articles chaussants de sécurité à usage professionnel.

(30) Priorité : **22.12.78 FR 7836261**

(43) Date de publication de la demande :
**09.07.80 Bulletin 80/14**

(45) Mention de la délivrance du brevet :
**28.12.83 Bulletin 83/52**

(84) Etats contractants désignés :
**AT BE CH DE GB IT LU NL SE**

(56) Documents cités :
**BE-A-   649 276**
**FR-A- 1 350 139**
**FR-A- 2 104 310**
**FR-A- 2 350 805**
**FR-A- 2 380 750**
**GB-A-   899 430**
**GB-A- 1 436 501**

(73) Titulaire : **PLASTIC-AUVERGNE Société dite :**
**Les Sarraix Celles sur Durolle**
**F-63250 Chabreloche (FR)**

(72) Inventeur : **Combronde, Roger**
**Les Sarraix Celles Sur Durolle**
**F-63250 Chabreloche (FR)**

(74) Mandataire : **Rodhain, Claude**
**30, rue La Boétie**
**F-75008 Paris (FR)**

Jouve, 18, rue St-Denis, 75001 Paris, France

## Procédé pour la fabrication d'articles chaussants de sécurité à usage professionnel

L'invention concerne un procédé et un moule spécialement adaptés pour la fabrication d'articles chaussants de sécurité à usage professionnel en particulier pour l'équipement du personnel évoluant sur les chantiers du bâtiment, ces articles étant obtenus par moulage à injection.

L'invention a pour objet un procédé pour la fabrication, par au moins deux injections successives, d'articles chaussants de sécurités tels que bottes, sabots, brodequins ou similaires du type comprenant au moins un insert tel qu'une semelle complétée ou non par une coquille de protection au niveau du bon bout, lesdites deux injections s'effectuant dans deux espaces de moulage différents sur chacune des faces de l'insert, ce procédé utilise un moule d'injection pourvu de deux parties ouvrantes, d'un fond à double pavé et d'une forme.

La demande de brevet Français FR-A-2 350 805 décrit un procédé et un appareil pour la fabrication d'articles chaussants comprenant un insert ; selon ce procédé, on moule une première partie de semelle sur la surface inférieure de l'insert au cours d'une première phase d'injection puis on moule une seconde partie de la semelle autour de la première partie de semelle et sur la partie supérieure et les surfaces latérales de l'insert au cours d'une seconde phase d'injection. On utilise à cet effet un moule d'injection qui comporte deux parties ouvrantes, un fond à double pavés et une forme. Les deux injections précitées s'effectuent dans deux espaces de moulage différents aménagés de part et d'autre de l'insert.

L'insert utilisé dans ce procédé est un insert de faible poids et il peut être facilement maintenu contre le pavé en le fixant par élasticité dans une cavité, ce qui ne serait pas concevable avec une semelle métallique de poids nettement plus élevé et qui ne s'adapterait pas exactement au fond du moule.

Le problème posé selon la présente invention, est de réaliser un article chaussant de sécurité dans lequel l'insert est constitué par une semelle métallique et il faut réaliser un bon maintien de la semelle métallique lors de l'injection de la partie extérieure ou semelle d'usure.

Le brevet français 1 350 139 décrit un élément rigide de protection et renforcement pour chaussures de sécurité dans lequel le positionnement de ces éléments de protection est obtenu au moyen de tétons ou saillies solidaires dudit élément de protection. Cette disposition ne peut être utilisée pour résoudre le problème exposé ci-dessus puisque ces tétons créeraient dans la semelle d'usure des trous qui nuieraient à la solidité de cette dernière.

Par ailleurs, le brevet Belge 649 276 décrit l'utilisation de doigts rétractables pour fixer une semelle dans un pavé d'un moule à injection ; ces doigts rétractables traversent la semelle, qui comporte des trous à cet effet. Ce système de fixation ne peut également résoudre le problème posé puisque, d'une part la semelle métallique de protection serait affaiblie du fait des trous qui y seraient aménagés et, d'autre part, la semelle extérieure comporterait des trous ce qui, comme cela a été exposé plus haut, nuirait à sa solidité.

L'invention a pour objet un procédé du type décrit ci-dessus dans lequel on assure un positionnement rigoureux et un bon maintien de la semelle métallique par rapport aux éléments du moule, ce positionnement étant réalisé dans toutes les directions et en particulier dans le sens de la hauteur et sans nuire à la solidité de l'élément chaussant en particulier de sa semelle d'usure.

Ceci est obtenu selon l'invention par le fait que l'on fixe la semelle métallique, préencollée, sur ses deux faces, sur le pavé de moule correspondant à la première injection, à distance de la forme pour ménager entre la partie supérieure de la semelle métallique posée sur le pavé et ladite forme un intervalle correspondant à l'épaisseur de la première de propreté réalisée lors de la première injection, on procède ensuite à l'ouverture du moule et au retrait de ce pavé et on amène en regard de la face visible de la semelle métallique le second pavé pour l'injection de la semelle d'usure qui viendra recouvrir cette face de la semelle métallique, le positionnement de ladite semelle métallique étant obtenu par le fait que le pavé correspondant à la première injection, comprend au moins deux doigts effaçables faisant saillie dans son empreinte, perpendiculairement au plan horizontal du pavé et venant en butée sur la face inférieure de la forme, la semelle métallique comportant, quant à elle, au moins deux encoches situées en deux points opposés de sa périphérie, l'écart entre les doigts étant légèrement inférieur à celui séparant les deux encoches de la semelle, afin que celle-ci soit affichée et positionnée sur le pavé par le jeu de sa propre élasticité par accrochage des doigts dans ses encoches, et le maintien de la semelle métallique contre le pavé étant obtenu par le fait que la forme comprend un ou plusieurs pions entretoises fixés sous la face inférieure de la forme, ces pions faisant saillie d'une hauteur égale à l'épaisseur de la semelle de propreté réalisée au cours de la première injection.

Selon une autre caractéristique de l'invention, la première injection réalisant la première de propreté est effectuée par l'intermédiaire d'un canal d'injection qui est situé sensiblement dans le plan médian longitudinal et transversal du pavé de la première injection et qui est divisé en deux branches symétriques débouchant de part et d'autre de la semelle métallique.

D'autres détails et avantages ressortiront de la description ci-après et des dessins annexés dans lesquels :

La Figure 1 est une vue schématique illustrant les éléments constitutifs du moule d'injection ;

La Figure 2 est une vue en coupe longitudinale du pavé correspondant à la première injection ;

La Figure 3 est une vue en plan de la semelle métallique ;

La Figure 4 est une vue schématique de dessus de la semelle métallique positionnée par rapport au pavé visible en Fig. 2.

L'objet essentiel de l'invention réside dans un procédé permettant de noyer dans le matériau d'injection une semelle métallique de protection réalisée en acier ressort, cette semelle étant rigoureusement positionnée et maintenue pendant l'opération d'injection de façon à être parfaitement centrée dans le plan longitudinal et transversal par rapport aux carrés de forme, c'est-à-dire par rapport à la périphérie de la semelle d'usure.

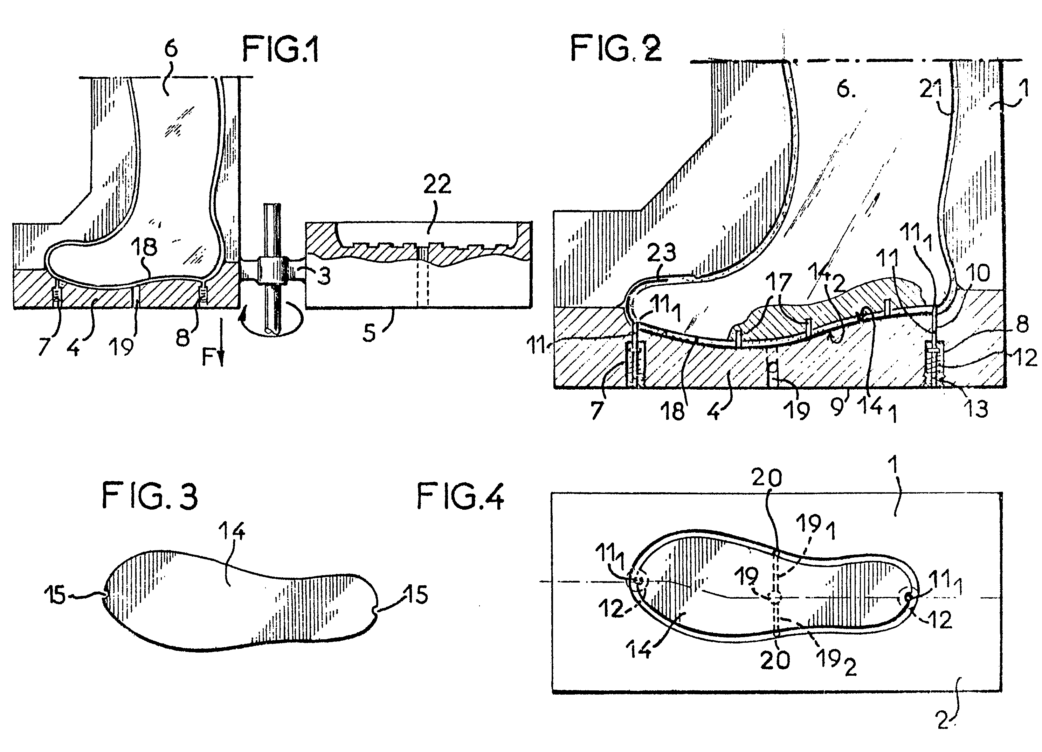

Ce procédé fait appel à un moule classique constitué de deux parties ouvrantes 1 et 2 (Fig. 4) correspondant à la tige de l'article chaussant et d'une plaque de fermeture 3 (Fig. 1) portant deux fonds de moule ou pavés 4 et 5 en particulier dans le cas où l'on réalise du « bicolore » à partir de deux injections successives. Ce moule comporte par ailleurs une forme classique 6 réalisée en métal et de préférence chauffée, cette forme définissant, par rapport aux parties latérales du moule et par rapport aux fonds, l'empreinte correspondant à la tige et à la semelle de l'article chaussant.

Selon l'invention, seul le pavé 4 correspondant à la première injection et la forme métallique 6 ont été perfectionnés en vue de la mise en œuvre du procédé dont il s'agit. A ce sujet, ce pavé 4 comporte deux chambrages 7 et 8 orientés dans un plan perpendiculaire à son plan horizontal 9, ces chambrages étant cylindriques et étant prolongés par des perçages 10 qui débouchent dans l'empreinte de moulage. Ces chambrages 7 et 8 servent de logement à des doigts de positionnement 11 montés effaçables sur des organes élastiques de rappel 12, concentriques aux doigts 11, ces organes élastiques pouvant être des ressorts immobilisés dans les chambrages 7 et 8 par des écrous de blocage 13. Ces ressorts ont pour vocation de repousser les doigts 11 vers l'extérieur du pavé en direction de l'empreinte de moulage, de manière à ce que leur extrémité $11_1$ fasse constamment saillie dans ladite empreinte de moulage.

On réalise l'affichage de la semelle métallique de protection 14 (Fig. 3) c'est-à-dire son positionnement par rapport au pavé 4, en accrochant ladite semelle sur les doigts 11, cette semelle comportant à cet effet deux encoches 15 situées en deux points opposés de sa périphérie, lesdites encoches recevant les extrémités supérieures $11_1$ des doigts 11. Afin d'obtenir un accrochage rigoureux évitant tout déplacement de la semelle métallique lors de l'injection, on fait en sorte que l'écart entre les deux doigts 11 soit légèrement inférieur à celui séparant le fond des deux encoches 15 de la semelle et l'on utilise l'élasticité de la semelle acier pour obtenir un véritable verrouillage de ladite semelle sur les doigts 11, ce verrouillage étant obtenu par un léger cintrage transversal de la semelle 14 afin d'amener les doigts 11 dans les deux encoches 15. Lorsque l'on relâche la semelle de protection, celle-ci, par sa flexibilité, se détend et s'arc-boute contre les doigts de positionnement 11.

Afin de réaliser l'enrobage de la semelle métallique dans le ou les matériaux d'injection, on fait en sorte de maintenir ladite semelle appliquée contre le pavé 4 à distance de la face inférieure 16 de la forme 6. Cet effet est obtenu par des pions entretoises 17 qui, dans l'exemple considéré, sont au nombre de trois, ces pions étant emmanchés à force dans la face inférieure de la forme mais faisant saillie dans l'empreinte de moulage d'une hauteur égale à l'épaisseur de la première injection qui formera la première de propreté 18 et recouvrira la face supérieure $14_1$ de la semelle métallique. Ces pions ont donc pour effet de maintenir la semelle métallique appliquée contre le pavé 4 et surtout de maintenir un écart constant sur toute la longueur du pied entre cette semelle et la forme de manière que le matériau d'injection remplissant la cavité définie entre cette semelle et la forme soit d'une épaisseur constante. L'extrémité $11_1$ des doigts de positionnement 11 fait saillie dans l'empreinte de moulage d'une hauteur égale à la saillie des pions 17 en raison du fait que ces doigts étant montés élastiques, ceux-ci sont nécessairement repoussés vers l'arrière lorsqu'ils viennent en contact de la forme 6 lors de la fermeture du moule.

Lorsque la semelle métallique est ainsi correctement positionnée, on procède à la fermeture du moule qui correspond à l'entrée en contact de la face supérieure $14_1$ de cette semelle avec les pions entretoises 17 et au contact des doigts 11 avec la face inférieure de la forme 6. Dans cet état, on procède à la première injection par le jeu du canal d'injection 19, ce canal étant situé sensiblement dans le plan médian longitudinal et transversal du moule (voir Fig. 4) mais se subdivisant à sa partie supérieure en deux branches $19_1$ et $19_2$ débouchant sensiblement au droit de la périphérie de la semelle métallique c'est-à-dire en 20. Le matériau injecté par ce canal 19 se répartit dans l'interstice correspondant à la tige 21 de l'article chaussant et dans l'espace défini par la partie en saillie des pions 17 et des doigts 11 de façon à former la première de propreté 18.

Après refroidissement, on procède au démoulage du pavé 4, par recul de celui-ci suivant la flèche F (Fig. 1) puis l'on fait pivoter de 180° la plaque rotative 3 pour amener en regard du moule le second pavé d'injection 5 comportant l'empreinte de moulage 22 correspondant à l'injection de la semelle d'usure. Aucun détail concernant ce second pavé de moulage 5 n'est donné étant donné qu'il s'agit d'une partie de moule tout à fait classique.

Le procédé selon l'invention permet ainsi d'obtenir des articles chaussants de sécurité comportant une semelle métallique de protection noyée entre les deux matériaux d'injection, la première injection réalisant la première de propreté 18, la seconde venant masquer la face inférieure 14₂ de la semelle métallique lors de la constitution de la semelle d'usure. La présence des pions entretoises 17 et des doigts 11 de positionnement assure un centrage et un maintien rigoureux de la semelle métallique 14 pendant les deux opérations de moulage, de sorte que celle-ci est rigoureusement centrée transversalement et longitudinalement dans le matériau d'injection, toutes les épaisseurs de matière étant ainsi d'une grande régularité d'un article chaussant à l'autre.

Par ailleurs, ce procédé évite également les erreurs éventuelles dues à un mauvais assortiment des semelles métalliques et des pointures de forme, dans la mesure où lesdites semelles doivent s'accrocher sur les doigts de positionnement 11. Bien entendu, la semelle de protection 14 peut être complétée, si nécessaire, d'une coquille de protection 23 située au niveau du bon bout et éventuellement d'un plaque de liaison 24 reliant ladite coquille 23 à la semelle de protection 14.

Le principal avantage d'avoir une semelle métallique de protection enrobée, c'est-à-dire noyée dans le matériau d'injection, est d'éviter les risques de décollage de cette semelle de protection ou les effets de cisaillage de la semelle dans la matière. La liaison entre la semelle métallique de protection et le matériau d'injection peut évidemment être facilitée par l'encollage préalable de la semelle métallique 14 sur ses deux faces.

## Revendications

1. Procédé pour la fabrication, par au moins deux injections successives, d'articles chaussants de sécurité tels que bottes, sabots, brodequins ou similaires du type comprenant au moins un insert tel qu'une semelle complétée ou non par une coquille de protection (23) au niveau du bon bout, lesdites deux injections s'effectuant dans deux espaces de moulage différents sur chacune des faces de l'insert, ce procédé utilisant un moule d'injection pourvu de deux parties ouvrantes (1-2), d'un fond (3) à double pavé (4-5) et d'une forme (6), procédé caractérisé en ce que l'on fixe une semelle métallique (14), préencollée sur ses deux faces, sur le pavé de moule (4) correspondant à la première injection, à distance de la forme (6) pour ménager entre la partie supérieure 14.1 de la semelle métallique 14 posée sur le pavé (4) et ladite forme (6) un intervalle (18) correspondant à l'épaisseur de la première de propreté réalisée lors de la première injection, on procède ensuite à l'ouverture du moule et au retrait de ce pavé (4) et on amène en regard de la face visible (14₂) de la semelle métallique (14) et le second pavé (5) pour l'injection de la semelle d'usure qui viendra recouvrir cette face (14₂) de la semelle métallique (14), le positionnement de ladite semelle métallique (14) étant obtenu par le fait que le pavé (4) correspondant à la première injection comprend au moins deux doigts effaçables (11) faisant saillie dans son empreinte, perpendiculairement au plan horizontal (9) du pavé (4) et venant en butée sur la face inférieure de la forme (6), la semelle métallique (14) comportant, quant à elle, au moins deux encoches (15) situées en deux points opposés de sa périphérie, l'écart entre les doigts (11) étant légèrement inférieur à celui séparant les deux encoches (15) de la semelle (14), afin que celle-ci soit affichée et positionnée sur le pavé (4) par le jeu de sa propre élasticité par accrochage des doigts (11) dans ses encoches, et le maintien de la semelle métallique (14) contre le pavé (4) étant obtenu par le fait que la forme (6) comprend un ou plusieurs pions entretoises (17) fixés sous la face inférieure de la forme (6), ces pions faisant saillie d'une hauteur égale à l'épaisseur de la semelle de propreté (18) réalisée au cours de la première injection.

2. Procédé selon la revendication 1, caractérisé en ce que la première injection réalisant la première de propreté est effectuée par l'intermédiaire d'un canal d'injection (19) qui est situé sensiblement dans le plan médian longitudinal et transversal du pavé 4 de la première injection et qui est divisé en deux branches symétriques (19-1, 19-2) débouchant de part et d'autre de la semelle métallique (14).

## Claims

1. A process for producing by at least two successive injections safety footwear such as boots, clogs, angkle-boots or the like, of the type comprising at least one insert such as a sole which may or may not be completed by a protecting shell (23) in the region of the right end, the said two injections being performed in two different mould spaces on each of the faces of the insert, said process employing an injection mould provided with two openable parts (1-2), a base (3) including double slabs (4-5) and a last (6), said process being characterized in that sides of the metal sole pre-coated on both faces with adhesive is fixed on the mould slab (4) corresponding to the first injection, remote from the last (6) so as to provide between the upper part 14.1 of the metal sole 14 placed on said slab (4) and said last (6) a grap (18) corresponding to the thickness of the insole produced during the first injection, the mould is then opened and said slab (4) stripped and the second slab (5) is brought into facing relation to the visible face (14₂) of the metal sole (14) for injection of the outsole which will cover this face (14₂) of the metal sole (14), the positioning of said metal sole (14) being obtained by the fact that the slab (4) corresponding to the first injection comprises at least two withdrawable fingers (11) which project into its mould cavity, perpendicularly to the horizontal plane (9) of the slab (4) and abutting the lower face of the last (6), the metal sole (14) comprising at least two notches (15) located in two opposed points of its periphery, the spacing between the fingers (11) being slightly less than the spacing separating the two notches (15) of the sole (14) so that the sole can be set and positioned on the slab (4) by means of its own elasticity by hooking the fingers (11) in its notches, and the maintenance of the metal sole (14) against the slab (4) being obtained by the fact that the last (6) comprises one or more spacer pins (17) fixed under the lower face of the last (6), said pins projecting to an extent equal to the thickness of the insole (18) produced during the first injection.

2. A process according to claim 1, characterised in that the first injection producing the insole is performed through an injection channel (19) which is located substantially in the longitudinal and transverse median plane of the slab (4) of the first injection and which is divided into two symmetrical branches (19.1, 19.2) which open out onto both sides of the metal sole (14).

## Ansprüche

1. Verfahren zur Herstellung von Sicherheitsschuhwerk, in Form von Stiefeln, Pantoffeln o. ä., welches Schuhwerk mindestens eine Einlage in Form einer Sohle aufweist und mit einer über die Zehenspitzen reichenden Schutzschale (23) versehen sein kann, in mindestens zwei aufeinanderfolgenden Spritzvorgängen, welche in zwei verschiedene zu beiden Seiten der Einlage gelegene Formräume vorgenommen werden, bei welchem Verfahren eine Spritzgußform verwendet wird, die zwei zu öffnende Teile (1-2), eine Basis (3) mit beidseits angeordneten Formbodenteilen (4-5) und eine Innenform (6) aufweist, dadurch gekennzeichnet, daß eine auf beiden Seiten vorgeleimte Metallsohle (14) auf dem Formbodenteil (4) des dem ersten Spritzvorgang zugeordneten Formraumes im Abstand von der Innenform (6) fixiert wird, um zwischen der Oberseite (14.1) der auf den Formbodenteil (4) gelegten Metallsohle (14) und der Innenform (6) einen der Dicke der beim ersten Spritzvorgang gebildeten ersten Schicht entsprechenden Zwischenraum vorzusehen, daß dann die Spritzgußform geöffnet und dieser Formbodenteil (4) abgezogen wird, daß der zweite Formbodenteil (5) in eine der sichtba-ren Fläche (14$_2$) der Metallsohle (14) gegen-überliegende Lage gebracht wird, um die Laufsohle zu gießen, die diese Seite (14.2) der Metallsohle (14) bedecken wird, wobei die Positionierung der Metallsohle (14) dadurch erreicht wird, daß der für den ersten Spritzvorgang vorge-sehene Formbodenteil (4) wenigstens zwei zu-rückziehbare Finger (11) aufweist, die über seinen Abdruck senkrecht zur horizontalen Ebene (9) des Formbodenteiles (4) vorspringen und an der Unterseite der Innenform (6) zum Anschlag kommen, wobei die Metallsohle (14) selbst wenigstens zwei an ihrem Umfang an gegenüberliegenden Punkten gelegene Einkerbungen (15) aufweist, wobei der Abstand zwischen den Fingern (11) etwas geringer ist als jener zwischen den beiden Einkerbungen (15) der Sohle (14), damit diese auf dem Formbodenteil (4) durch die Wirkung ihrer eigenen Elastizität und durch Eingreifen der Finger (11) in ihre Einkerbungen an den Formbodenteil (4) angelegt und auf diesem positioniert wird, und wobei das Festhalten der Metallsohle (14) auf dem Formbodenteil (4) dadurch erreicht wird, daß die Innenform (6) eine oder mehrere unter der Unterseite der Innenform (6) befestigte Abstandshalter (17) aufweist, die um jene Höhe vorspringen, die der Dicke der im ersten Spritzvorgang gebildeten ersten Schicht (18) entspricht.

2. Verfahren nach Anspruch 1, dadurch gekennzeichnet, daß der erste die erste Schicht bildende Spritzvorgang über einen Einspritzkanal (19) erfolgt, welcher Kanal im wesentlichen in der mittleren Längs- und Querebene des für den ersten Spritzvorgang vorgesehenen Formbodenteiles (4) liegt und der sich in zwei symmetrische Äste (19.1, 19.2) teilt, die beidseits der Metallsohle (14) münden.

0 013 197

FIG.1

FIG.2

FIG.3

FIG.4